# EUROPEAN PATENT SPECIFICATION

(11) **EP 3 944 363 B1**
(45) Date of publication and mention of the grant of the patent: **07.06.2023**
(21) Application number: 20773852.7
(22) Date of filing: 05.03.2020
(51) Int. Cl.: H01M 4/02, H01M 4/04, H01M 4/13, H01M 4/139, H01M 10/04, H01M 10/0583, H01M 10/0585, H01M 4/62

(54) **ELECTRODE, METHOD FOR PRODUCING ELECTRODE, AND BATTERY**
ELEKTRODE, VERFAHREN ZUR HERSTELLUNG EINER ELEKTRODE UND BATTERIE
ÉLECTRODE, PROCÉDÉ DE PRODUCTION D'ÉLECTRODE ET BATTERIE

(30) Priority: 20.03.2019 JP 2019052088
(43) Date of publication of application: 26.01.2022
(73) Proprietor: Envision AESC Japan Ltd., Zama-shi, Kanagawa 252-0012 (JP)
(72) Inventor: YANAGISAWA, Ryota, Zama-shi, Kanagawa 252-0012 (JP); YAMAMOTO, Yoshimasa, Zama-shi, Kanagawa 252-0012 (JP)
(74) Representative: Hamer, Christopher K.
(86) International application number: PCT/JP2020/009336
(87) International publication number: WO 2020/189298

(56) References cited:
- WO-A1-2016/163562
- WO-A1-2019/021774
- JP-A- H02 296 840
- JP-A- 2002 334 690
- JP-A- 2007 224 056
- JP-A- 2011 108 516
- JP-A- 2013 191 485
- JP-A- 2016 535 401
- JP-A- 2017 123 269
- US-A1- 2018 069 220

## Description

### TECHNICAL FIELD

The present invention relates to an electrode, a method of manufacturing an electrode, and a battery.

### BACKGROUND ART

Secondary batteries, particularly non-aqueous electrolyte secondary batteries are developed as one of the battery. The non-aqueous electrolyte secondary battery includes a positive electrode, a negative electrode, and a separator. The separator is positioned between the positive electrode and the negative electrode.

Patent Document 1 discloses an example of the separator. The separator includes a polyethylene microporous membrane and a heat-resistant porous layer on both surfaces of the polyethylene microporous membrane. The heat-resistant porous layer includes an inorganic filler formed of polymetaphenylene isophthalamide and aluminum hydroxide.

Patent Document 2 discloses another example of the separator. The separator includes a polyethylene microporous membrane and a porous layer on both surfaces of the polyethylene microporous membrane. The porous layer includes an inorganic filler formed of meta-type wholly aromatic polyamide and α-alumina.

Patent Documents 3 and 4 disclose still another example of the separator. The separator includes a polyethylene porous film and a heat-resistant porous layer on the polyethylene porous film. The heat-resistant porous layer includes liquid crystal polyester and alumina particles.

Patent Document 5 teaches a lithium ion secondary battery wherein the separator comprises a polyethylene layer coated with a mixture comprising magnesium hydroxide particles and a binder.

### RELATED DOCUMENT

### PATENT DOCUMENT

[Patent Document 1] Japanese Unexamined Patent Publication No. 2009-231281
[Patent Document 2] Japanese Unexamined Patent Publication No. 2010-160939
[Patent Document 3] Japanese Unexamined Patent Publication No. 2008-311221
[Patent Document 4] Japanese Unexamined Patent Publication No. 2008-307893
[Patent Document 5] US Patent Application 2018069220 A1

### SUMMARY OF THE INVENTION

### TECHNICAL PROBLEM

The inventors of the invention have conducted studies regarding a novel structure for electrically insulating a positive electrode and a negative electrode in a battery.

An example of an object of the invention is to electrically insulate a positive electrode and a negative electrode by a novel structure. Another object of the invention will be clearly shown from the disclosure of the specification.

### SOLUTION TO PROBLEM

In one embodiment, there is provided an electrode including:
an active material layer; and
magnesium hydroxide particles over the active material layer, the magnesium hydroxide particles being surface treated with stearic acid.

In another embodiment, there is provided a method of manufacturing an electrode, the method including:
applying a solution including magnesium hydroxide surface treated with stearic acid over an active material layer.

In still another embodiment, there is provided a battery including:
an electrode functioning as a positive electrode or a negative electrode,
in which the electrode includes an active material layer, and magnesium hydroxide particles over the active material layer, the magnesium hydroxide particles are surface treated with stearic acid.

### ADVANTAGEOUS EFFECTS OF INVENTION

According to the embodiments of the invention, it is possible to electrically insulate the positive electrode and the negative electrode by a novel structure.

### BRIEF DESCRIPTION OF THE DRAWINGS

Fig. 1 is a top view of a battery according to an embodiment.
Fig. 2 is an A-A' sectional view of Fig. 1.
Fig. 3 is an enlarged view of one part of Fig. 2.
Fig. 4 is a diagram for explaining an example of a method of manufacturing a positive electrode shown in Fig. 3.
Fig. 5 is a diagram showing a first modification example of Fig. 3.
Fig. 6 is a diagram showing a second modification example of Fig. 3.
Fig. 7 is a diagram showing a first modification example of Fig. 2.
Fig. 8 is a diagram showing a second modification example of Fig. 2.

### DESCRIPTION OF EMBODIMENTS

Hereinafter, an embodiment of the invention will be described with reference to the drawings. In all of the drawings, the same reference numerals are used for the same constituent elements and the description will not be repeated.

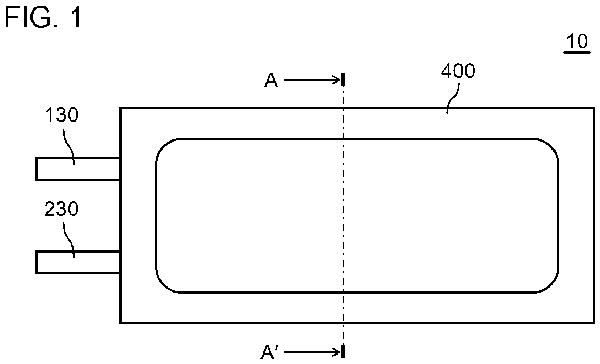

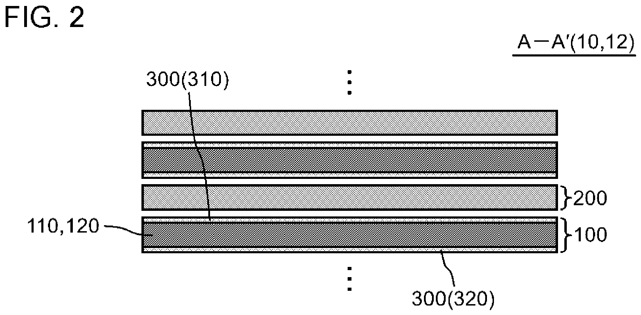

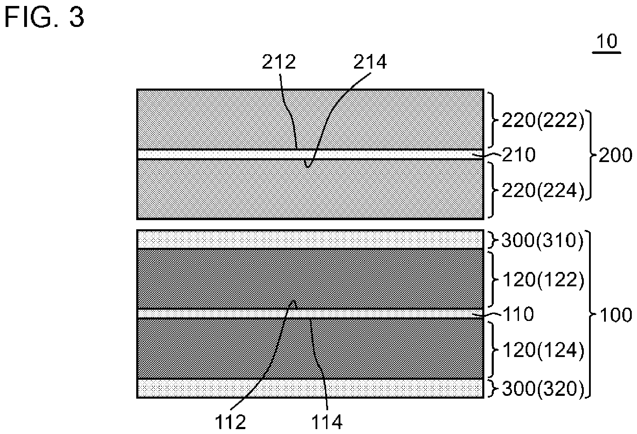

Fig. 1 is a top view of a battery 10 according to the embodiment. Fig. 2 is an A-A' sectional view of Fig. 1. Fig. 3 is an enlarged view of one part of Fig. 2. Fig. 2 does not show an exterior material 400 shown in Fig. 1, for the description.

The outline of the battery 10 will be described with reference to Fig. 3. The battery 10 includes a positive electrode 100 and a negative electrode 200. The positive electrode 100 includes an active material layer 120 (an active material layer 122 and an active material layer 124) and a layer 300 (a layer 310 and a layer 320) . The layer 300 is over the active material layer 120. The layer 300 contains magnesium hydroxide particles (A). The magnesium hydroxide particles (A) are surface treated with stearic acid.

According to the configuration described above, it is possible to electrically insulate the positive electrode 100 and the negative electrode 200 by a novel structure. Specifically, in the configuration described above, the positive electrode 100 contains magnesium hydroxide particles (A). The magnesium hydroxide particles (A) can function as a separator for electrically insulating the positive electrode 100 and the negative electrode 200.

In addition, according to the configuration described above, it is possible to improve dispersibility of the magnesium hydroxide particles (A) in a slurry. Specifically, in the configuration described above, the magnesium hydroxide particles (A) are surface treated with stearic acid. Accordingly, in a case where the slurry containing the magnesium hydroxide particles (A) is used in the formation of the layer 300, it is possible to improve the dispersibility of the magnesium hydroxide particles (A) in the slurry by stearic acid.

In addition, according to the configuration described above, it is possible to suppress alkalinity of the magnesium hydroxide particles (A). In a case where the alkalinity is strong, carbon dioxide in the battery is deposited by the alkalinity and adheres to a surface of an active material. Therefore, suppressing the alkaline component is suitable for the battery 10. Specifically, in the configuration described above, the magnesium hydroxide particles (A) are surface treated with stearic acid. Therefore, it is possible to suppress alkalinity of the magnesium hydroxide particles (A) by stearic acid.

In particular, in the example shown in Fig. 3, there is no resin layer (that is, a separator) between the positive electrode 100 and the negative electrode 200. In the example shown in Fig. 3, as described above, the magnesium hydroxide particles (A) can function as a separator. Accordingly, the resin layer may not be provided between the positive electrode 100 and the negative electrode 200. In this case, a thickness of the battery 10 can be thin. In another example, the resin layer (for example, a separator) may exist between the positive electrode 100 and the negative electrode 200.

The details of the battery 10 will be described with reference to Fig. 1.

The battery 10 includes a first lead 130, a second lead 230, and an exterior material 400.

The first lead 130 is electrically connected to the positive electrode 100 shown in Fig. 2. The first lead 130 may be formed of, for example, aluminum or an aluminum alloy.

The second lead 230 is electrically connected to the negative electrode 200 shown in Fig. 2. The second lead 230 may be formed of, for example, copper, a copper alloy, or nickel-plated article thereof.

In the example shown in Fig. 1, the exterior material 400 has a rectangular shape having four sides. In the example shown in Fig. 1, the first lead 130 and the second lead 230 are protruded from one common side of the four sides of the exterior material 400. In another example, the first lead 130 and the second lead 230 may be protruded from different sides (for example, sides opposite to each other) of the four sides of the exterior material 400.

The exterior material 400 accommodates a laminate 12 shown in Fig. 2, together with an electrolyte (not shown).

The exterior material 400, for example, includes a thermally fusible resin layer and a barrier layer, and may be, for example, a laminate film including a thermally fusible resin layer and a barrier layer.

A resin material forming the thermally fusible resin layer may be, for example, polyethylene (PE), polypropylene, nylon, polyethylene terephthalate (PET), or the like. A thickness of the thermally fusible resin layer is, for example, equal to or greater than 20 µm and equal to or smaller than 200 µm.

The barrier layer, for example, has barrier properties for preventing leakage of the electrolyte or penetration of moisture from the outside, and may be, for example, a barrier layer formed of metal such as stainless steel (SUS) foil, aluminum foil, aluminum alloy foil, copper foil, or titanium foil. A thickness of the barrier layer is, for example, equal to or greater than 10 µm and equal to or smaller than 100 µm.

The thermally fusible resin layer of the laminate film may be one layer or two or more layers. In the same manner, the barrier layer of the laminate film may be one layer or two or more layers.

The electrolyte is, for example, a non-aqueous electrolyte. This non-aqueous electrolyte may include a lithium salt and a solvent for dissolving lithium salt.

Examples of the lithium salt may include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiC₄F₉SO₃, Li(CF₃SO₂)₂N, lower fatty acid lithium carboxylate, and the like.

Examples of the solvent for dissolving a lithium salt may include carbonates such as ethylene carbonate (EC), propylene carbonate (PC), butylene carbonate (BC), dimethyl carbonate (DMC), ethyl methyl carbonate (EMC), diethyl carbonate (DEC), methyl ethyl carbonate (MEC), and vinylene carbonate (VC) ; lactones such as γ-butyrolactone and γ-valerolactone; ethers such as trimethoxymethane, 1,2-dimethoxyethane, diethyl ether, tetrahydrofuran, and 2-methyltetrahydrofuran; sulfoxides such as dimethyl sulfoxide; oxolanes such as 1,3-dioxolane and 4-methyl-1,3-dioxolane; a nitrogen-containing solvent such as acetonitrile, nitromethane, formamide, and dimethylformamide; organic acid esters such as methyl formate, methyl acetate, ethyl acetate, butyl acetate, methyl propionate, and ethyl propionate; phosphate triesters and diglymes; triglymes; sulfolanes such as sulfolane and methyl sulfolane; oxazolidinones such as 3-methyl-2-oxazolidinone; and sultones such as 1,3-propane sultone, 1,4-butane sultone, and naphtha sultone; or the like. These substances may be used alone or in combination thereof.

The details of the laminate 12 will be described with reference to Fig. 2.

The laminate 12 includes the plurality of positive electrodes 100 and the plurality of negative electrodes 200. The plurality of positive electrodes 100 and the plurality of negative electrodes 200 are alternately laminated on each other.

The details of each of the positive electrode 100, the negative electrode 200, and the separator 300 will be described with reference to Fig. 3.

The positive electrode 100 includes a current collector 110, an active material layer 120 (an active material layer 122 and an active material layer 124) and a layer 300 (a layer 310 and a layer 320). The current collector 110 includes a first surface 112 and a second surface 114. The second surface 114 is opposite to the first surface 112. The active material layer 122 is over the first surface 112 of the current collector 110. The active material layer 124 is over the second surface 114 of the current collector 110. The layer 310 is over the active material layer 122. The layer 320 is over the active material layer 124.

The current collector 110 may be formed of, for example, aluminum, stainless steel, nickel, titanium, or an alloy thereof. A shape of the current collector 110 may be, for example, a foil, a flat plate, or a mesh.

The active material layers 120 (the active material layer 122 and the active material layer 124) include an active material, a binder resin, and a conductive assist.

The active material contained in the active material layer 120 (the active material layer 122 and the active material layer 124) is, for example, represented by LiₐNi_{b}M_{1-b}O₂ (M is one or more kinds of element selected from Co, Mn, Al, Ti, Zr, Na, Ba, and Mg). LiₐNi_{b}M_{1-b}O₂ is, for example,
lithium-nickel composite oxide;
lithium-nickel-A1 composite oxide (A1 is one of cobalt, manganese, aluminum, titanium, zirconium, sodium, barium, and magnesium);
lithium-nickel-B1-B2 composite oxide (each of B1 and B2 is one of cobalt, manganese, aluminum, titanium, zirconium, sodium, barium, and magnesium. B1 and B2 are different from each other);
lithium-nickel-C1-C2-C3 composite oxide (each of C1 to C3 is one of cobalt, manganese, aluminum, titanium, zirconium, sodium, barium, and magnesium. C1 to C3 are different from each other);
lithium-nickel-D1-D2-D3-D4 composite oxide (each of D1 to D4 is one of cobalt, manganese, aluminum, titanium, zirconium, sodium, barium, and magnesium. D1 to C4 are different from each other);
lithium-nickel-E1-E2-E3-E4-E5 composite oxide (each of E1 to E5 is one of cobalt, manganese, aluminum, titanium, zirconium, sodium, barium, and magnesium. E1 to E5 are different from each other);
lithium-nickel-F1-F2-F3-F4-F5-F6 composite oxide (each of F1 to F6 is one of cobalt, manganese, aluminum, titanium, zirconium, sodium, barium, and magnesium. F1 to F6 are different from each other);
lithium-nickel-G1-G2-G3-G4-G5-G6-G7 composite oxide (each of G1 to G7 is one of cobalt, manganese, aluminum, titanium, zirconium, sodium, barium, and magnesium. G1 to G7 are different from each other); or
lithium-nickel-cobalt-manganese-aluminum-titanium-zirconium -sodium-barium-magnesium composite oxide. A composition ratio a of LiₐNi_{b}M_{1-b}O₂ is, for example, 0.95 ≤ a ≤ 1.05. A composition ratio b of LiₐNi_{b}M_{1-b}O₂ may be, for example, suitably determined. The composition ratio b is, for example, a ≥ 0.50. In other examples, the active material included in the active material layers 120 (the active material layer 122 and the active material layer 124) may be composite oxide of lithium and transition metal such as lithium-cobalt composite oxide or lithium-manganese composite oxide; a transition metal sulfide such as TiS₂, FeS, or MoS₂; transition metal oxide such as MnO, V₂O₅, V₆O₁₃, or TiO₂; or olivine type lithium phosphorus oxide. The olivine type lithium phosphorus oxide includes, for example, at least one of element of the group consisting of Mn, Cr, Co, Cu, Ni, V, Mo, Ti, Zn, Al, Ga, Mg, B, Nb, and Fe, lithium, phosphorus, and oxygen. In these compounds, some elements may be partially substituted with other elements, in order to improve properties thereof. These substances may be used alone or in combination thereof.

Among these, in a case where it is desired to use a layered active material containing nickel equal to or more than 60% in the positive electrode active material layer, the alkalinity is strongly exhibited. Therefore, this alkalinity can be suppressed by using magnesium hydroxide surface treated with stearic acid, which is more suitable in the invention.

A density of the active material contained in the active material layer 120 (the active material layer 122 and the active material layer 124) is, for example, equal to or greater than 2.0 g/cm³ and equal to or smaller than 4.0 g/cm³.

A thickness of the active material layer (the active material layer 122 or the active material layer 124) on one surface of both surfaces (the first surface 112 and the second surface 114) of the current collector 110 may be, for example, suitably determined. The thickness is, for example, equal to or smaller than 60 µm.

A total thickness of the active material layers (the active material layer 122 and the active material layer 124) over both surfaces (the first surface 112 and the second surface 114) of the current collector 110 may be, for example, suitably determined. The thickness is, for example, equal to or smaller than 120 µm.

The active material layers 120 (the active material layer 122 and the active material layer 124) can be, for example, manufactured as follows. First, an active material, a binder resin, and a conductive assist are dispersed in an organic solvent to prepare a slurry. The organic solvent is, for example, N-methyl-2-pyrrolidone (NMP). Next, this slurry is applied over the first surface 112 of the current collector 110, the slurry is dried, the pressing is performed, if necessary, and the active material layer 120 (active material layer 122) is formed over the current collector 110. The active material layer 124 can also be formed in the same manner.

A binder resin included in the active material layers 120 (the active material layer 122 and the active material layer 124) is, for example, polytetrafluoroethylene (PTFE) or polyvinylidene fluoride (PVDF) .

The amount of the binder resin included in the active material layer 120 (the active material layer 122 or the active material layer 124) may be suitably determined. The amount of binder resin included in the active material layer 122 is, for example, equal to or greater than 0.1 parts by mass and equal to or smaller than 10.0 parts by mass with respect to 100 parts by mass of a total mass of the active material layer 122. The same applies to the active material layer 124.

The conductive assist included in the active material layers 120 (the active material layer 122 and the active material layer 124) is, for example, carbon black, ketjen black, acetylene black, natural graphite, artificial graphite, carbon fiber, or the like. Graphite may be, for example, flake graphite or spherical graphite. These substances may be used alone or in combination thereof.

The amount of the conductive assist included in the active material layer 120 (the active material layer 122 or the active material layer 124) may be suitably determined. The amount of conductive assist included in the active material layer 122 is, for example, equal to or greater than 3.0 parts by mass and equal to or smaller than 8.0 parts by mass with respect to 100 parts by mass of a total mass of the active material layer 120. The same applies to the active material layer 124.

The layer 300 (the layer 310 and the layer 320) contains the plurality of magnesium hydroxide particles (A) and a resin (B) . The resin (B) functions as a binder resin for adhering the plurality of magnesium hydroxide particles (A) to each other.

An average particle diameter of the magnesium hydroxide particles (A) is, for example, equal to or greater than 50 nm and equal to or smaller than 10 um. In a case where the average particle diameter is equal to or greater than the lower limit, it is possible to improve dispersibility of the magnesium hydroxide particles (A) in a slurry. In a case where the average particle diameter is equal to or smaller than the upper limit, unevenness on the surface of the layer 300 due to the magnesium hydroxide particles (A) can be suppressed.

The resin (B) is, for example, at least one of aromatic polyamide, polyimide, polyvinylidene fluoride (PVdF), polyacrylonitrile, polytetrafluoroethylene (PTFE), polyimideamide, and polyamide. The resin (B) is also preferable from a viewpoint of peel strength, because aromatic polyamide particularly has high heat resistance and high bondability with magnesium hydroxide surface treated with stearic acid. As another example, the resin (B) may be an engineering plastic, such as at least one of polyetheretherketone (PEEK), polyphenylene sulfide (PPS), polyetherimide (PEI), polyethersulfone (PESU), polysulfone (PSU), and polyphenylsulfone (PPSU).

The negative electrode 200 includes the current collector 210 and active material layer 220 (the active material layer 222 and the active material layer 224) . The current collector 210 includes the first surface 212 and the second surface 214. The second surface 214 is opposite to the first surface 212. The active material layer 222 is over the first surface 212 of the current collector 210. The active material layer 224 is over the second surface 214 of the current collector 210.

The current collector 210 may be formed of, for example, copper, stainless steel, nickel, titanium, or an alloy thereof. A shape of the current collector 210 may be, for example, a foil, a flat plate, or a mesh.

The active material layers 220 (the active material layer 222 and the active material layer 224) include an active material and a binder resin. The active material layers 220 may further include a conductive assist, if necessary.

Examples of the active material included in the active material layers 220 (the active material layer 222 and the active material layer 224) include a carbon material such as graphite storing lithium, amorphous carbon, diamond-like carbon, fullerene, carbon nanotube, or carbon nanohorn; a lithium-based metal material such as lithium metal or lithium alloy, an Si-based material such as Si, SiO₂, SiOₓ (0 < x ≤ 2), an Si-containing composite material; a conductive polymer material such as polyacetylene or polypyrrole; and the like. These substances may be used alone or in combination thereof. In one example, the active material layers 220 (the active material layer 222 and the active material layer 224) may include a first group of graphite particles (for example, natural graphite) having a first average particle diameter and a first average hardness and a second group of graphite particles (for example, natural graphite) having a second average particle diameter and a second average hardness. The second average particle diameter may be smaller than the first average particle diameter, the second average hardness may be higher than the first average hardness, a total mass of the second group of graphite particles may be smaller than a total mass of the first group of graphite particles, and the total mass of the second group of graphite particles may be, for example, equal to or greater than 20 parts by mass and equal to or smaller than 30 parts by mass with respect to 100 parts by mass of the total mass of the first group of graphite particles.

A density of the active material contained in the active material layer 220 (the active material layer 222 and the active material layer 224) is, for example, equal to or greater than 1.2 g/cm³ and equal to or smaller than 2.0 g/cm³.

A thickness of the active material layer (the active material layer 222 or the active material layer 224) over one surface of both surfaces (the first surface 212 and the second surface 214) of the current collector 210 may be, for example, suitably determined. The thickness is, for example, equal to or smaller than 60 µm.

A total thickness of the active material layers (the active material layer 222 and the active material layer 224) over both surfaces (the first surface 212 and the second surface 214) of the current collector 210 may be, for example, suitably determined. The thickness is, for example, equal to or smaller than 120 µm.

The active material layers 220 (the active material layer 222 and the active material layer 224) can be, for example, manufactured as follows. First, an active material and a binder resin are dispersed in a solvent to prepare a slurry. The solvent may be, for example, an organic solvent such as N-methyl-2-pyrrolidone (NMP) or water. Next, this slurry is applied over the first surface 212 of the current collector 210, the slurry is dried, the pressing is performed, if necessary, and the active material layer 220 (active material layer 222) is formed over the current collector 210. The active material layer 224 can also be formed in the same manner.

A binder resin included in the active material layers 220 (the active material layer 222 and the active material layer 224) may be, for example, a binder resin such as polyvinylidene fluoride (PVDF), in a case of using an organic solvent as the solvent for obtaining the slurry, and may be, for example, a rubber-based binder (for example, styrene-butadiene rubber (SBR)) or an acryl-based binder resin, in a case of using water as the solvent for obtaining the slurry. Such a water-based binder resin may be an emulsion form. In a case of using water as the solvent, the water-based binder and a thickener such as carboxymethyl cellulose (CMC) is preferably used in combination.

The amount of the binder resin included in the active material layer 220 (the active material layer 222 or the active material layer 224) may be suitably determined. The amount of binder resin included in the active material layer 222 is, for example, equal to or greater than 0.1 parts by mass and equal to or smaller than 10.0 parts by mass with respect to 100 parts by mass of a total mass of the active material layer 222. The same applies to the active material layer 224.

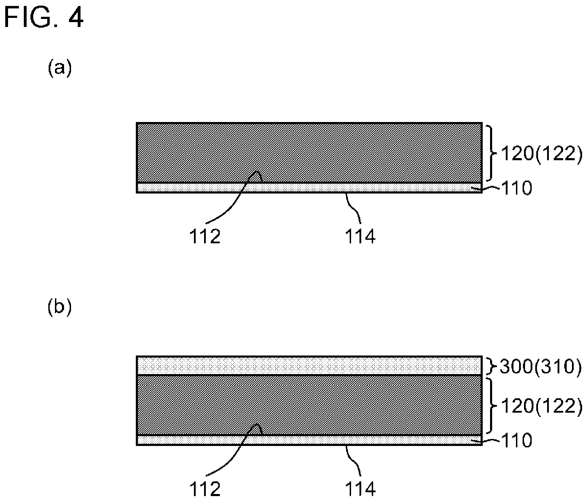

Fig. 4 is a diagram for explaining an example of a method of manufacturing the positive electrode 100 shown in Fig. 3. The positive electrode 100 can be manufactured as follows.

First, as shown in Fig. 4(a), the active material layer 120 (the active material layer 122) is formed over the first surface 112 of the current collector 110. As described above, the active material layer 120 is formed by applying a slurry containing an active material, a binder resin, a conductive assist, and a solvent (for example, an organic solvent) over the first surface 112 of the current collector 110. In the step shown in Fig. 4(a), the active material layer 120 (that is, the slurry) is not dried and is in a liquid state.

Next, as shown in Fig. 4(b), the layer 300 (the layer 310) is formed over the active material layer 120. The layer 300 is formed by applying a solution containing the magnesium hydroxide particles (A), the resin (B), and a solvent (C) over the active material layer 120. The solution may be applied, for example, by a reverse roll, a direct roll, a doctor blade, a knife, an extrusion, curtain, gravure, a bar, a dip, or a squeeze. The solvent (C) is, for example, N-methyl-2-pyrrolidone.

Next, the active material layer 120 and the layer 300 are dried.

The active material layer 120 (the active material layer 124) and the layer 300 (the layer 320) can be formed over the second surface 114 of the current collector 110, in the same manner.

By doing so, the positive electrode 100 can be manufactured.

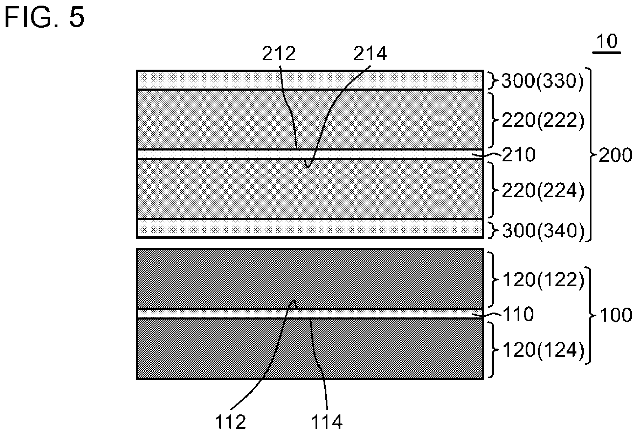

Fig. 5 is a diagram showing a first modification example of Fig. 3.

As shown in Fig. 5, the negative electrode 200 may include the layer 300 (a layer 330 and a layer 340) . The layer 330 is over the active material layer 222 and the layer 340 is over the active material layer 224. The layer 300 of the negative electrode 200 may contain the magnesium hydroxide particles (A) and may further contain the resin (B), if necessary, in the same manner as the layer 300 shown in Fig. 3.

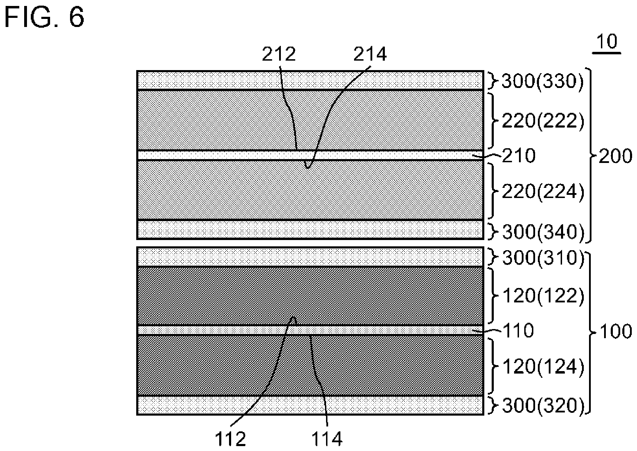

Fig. 6 is a diagram showing a second modification example of Fig. 3.

As shown in Fig. 6, both the positive electrode 100 and the negative electrode 200 may include the layer 300.

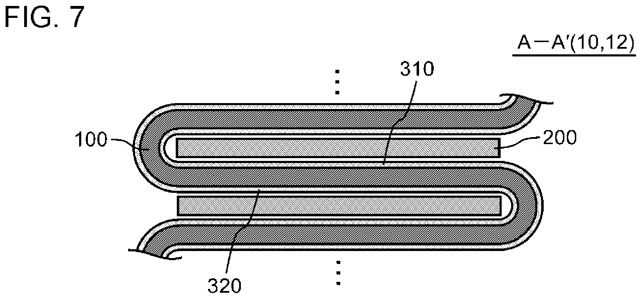

Fig. 7 is a diagram showing a first modification example of Fig. 2.

As shown in Fig. 7, the positive electrode 100 may be folded in a zigzag manner. In the example shown in Fig. 7, the battery 10 (laminate 12) includes the plurality of negative electrodes 200. The positive electrode 100 is folded in a zigzag so that a part of the positive electrode 100 is positioned between the adjacent negative electrodes 200.

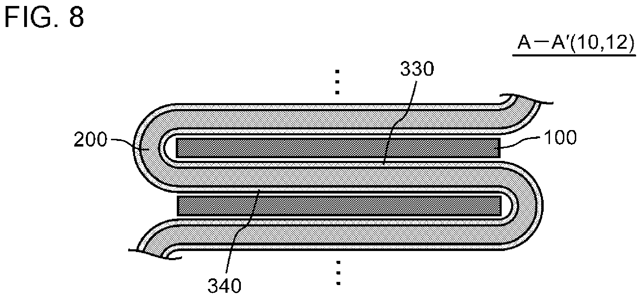

Fig. 8 is a diagram showing a second modification example of Fig. 2.

As shown in Fig. 8, the negative electrode 200 may be folded in a zigzag manner. In the example shown in Fig. 8, the battery 10 (laminate 12) includes the plurality of positive electrodes 100. The negative electrode 200 is folded in a zigzag so that a part of the negative electrode 200 is positioned between the adjacent positive electrodes 100.

Hereinabove, the embodiments of the invention have been described with reference to the drawings, but these are merely examples of the invention, and various other configurations may also be used.

This application claims priority based on Japanese Patent Application No. 2019-052088 filed on March 20, 2019.

### REFERENCE SIGNS LIST

- 10:: battery
- 12:: laminate
- 100:: positive electrode
- 110:: current collector
- 112:: first surface
- 114:: second surface
- 120:: active material layer
- 122:: active material layer
- 124:: active material layer
- 130:: first lead
- 200:: negative electrode
- 210:: current collector
- 212:: first surface
- 214:: second surface
- 220:: active material layer
- 222:: active material layer
- 224:: active material layer
- 230:: second lead
- 300:: layer
- 300:: separator
- 310:: layer
- 320:: layer
- 330:: layer
- 340:: layer
- 400:: exterior material

## Claims

1. An electrode comprising:
an active material layer; and
magnesium hydroxide particles over the active material layer, the magnesium hydroxide particles being surface treated with stearic acid.

2. The electrode according to claim 1, further comprising:
a layer over the active material layer,
wherein the layer includes the magnesium hydroxide particles and a resin.

3. The electrode according to claim 2,
wherein the resin is at least one of aromatic polyamide, polyimide, polyvinylidene fluoride (PVdF), polyacrylonitrile, polytetrafluoroethylene (PTFE), polyimideamide, and polyamide.

4. A method of manufacturing an electrode, the method comprising:
applying a solution comprising magnesium hydroxide surface treated with stearic acid over an active material layer.

5. A battery comprising:
an electrode functioning as a positive electrode or a negative electrode,
wherein the electrode includes an active material layer, and magnesium hydroxide particles over the active material layer, the magnesium hydroxide particles are surface treated with stearic acid.

6. The battery according to claim 5,
wherein no resin layer exists between the positive electrode and the negative electrode adjacent to each other.

7. The battery according to claim 5 or 6,
wherein the electrode is folded in a zigzag manner.

## Patentansprüche

1. Elektrode, die Folgendes umfasst:
eine Schicht aus aktivem Material; und
Magnesiumhydroxidpartikel über der Schicht aus aktivem Material, wobei die Magnesiumhydroxidpartikel mit Stearinsäure oberflächenbehandelt sind.

2. Elektrode nach Anspruch 1, die ferner Folgendes umfasst:
eine Schicht über der Schicht aus aktivem Material,
wobei die Schicht die Magnesiumhydroxidpartikel und ein Harz enthält.

3. Elektrode nach Anspruch 2, wobei das Harz wenigstens eines aus aromatischem Polyamid, Polyimid, Polyvinylidenfluorid (PVdF), Polyacrylnitril, Polytetrafluorethylen (PTFE), Polyimidamid und Polyamid ist.

4. Verfahren zur Herstellung einer Elektrode, wobei das Verfahren Folgendes beinhaltet:
Aufbringen einer Lösung, die mit Stearinsäure oberflächenbehandeltes Magnesiumhydroxid umfasst, auf eine Schicht aus aktivem Material.

5. Batterie, die Folgendes umfasst:
eine Elektrode, die als positive oder negative Elektrode wirkt,
wobei die Elektrode eine Schicht aus aktivem Material und Magnesiumhydroxidpartikeln über der Schicht aus aktivem Material aufweist, wobei die Magnesiumhydroxidpartikel mit Stearinsäure oberflächenbehandelt sind.

6. Batterie nach Anspruch 5,
wobei zwischen der positiven Elektrode und der negativen Elektrode, die nebeneinanderliegen, keine Harzschicht vorhanden ist.

7. Batterie nach Anspruch 5 oder 6, wobei die Elektrode zickzackförmig gefaltet ist.

## Revendications

1. Électrode comprenant :
une couche de matériau actif ; et
des particules d'hydroxyde de magnésium par-dessus la couche de matériau actif, les particules d'hydroxyde de magnésium étant traitées en surface avec de l'acide stéarique.

2. Électrode selon la revendication 1, comprenant en outre :
une couche par-dessus la couche de matériau actif, dans laquelle la couche inclut les particules d'hydroxyde de magnésium et une résine.

3. Électrode selon la revendication 2, dans laquelle la résine en est au moins une choisie parmi un polyamide aromatique, un polyimide, un poly(fluorure de vinylidène) (PVDF), un polyacrylonitrile, un polytétrafluoroéthylène (PTFE) , un polyimide-amide, et un polyamide.

4. Procédé de fabrication d'une électrode, le procédé comprenant :
l'application d'une solution comprenant une surface d'hydroxyde de magnésium traitée avec de l'acide stéarique sur une couche de matériau actif.

5. Batterie comprenant :
une électrode fonctionnant comme une électrode positive ou une électrode négative, dans laquelle l'électrode inclut une couche de matériau actif, et des particules d'hydroxyde de magnésium par-dessus la couche de matériau actif, les particules d'hydroxyde de magnésium sont traitées en surface avec de l'acide stéarique.

6. Batterie selon la revendication 5, dans laquelle aucune couche de résine n'existe entre l'électrode positive et l'électrode négative adjacentes l'une à l'autre.

7. Batterie selon la revendication 5 ou 6, dans laquelle l'électrode est pliée en zigzag.
